# EUROPÄISCHE PATENTSCHRIFT

(11) **EP 2 783 088 B1**
(45) Veröffentlichungstag und Bekanntmachung des Hinweises auf die Patenterteilung: **22.08.2018**
(21) Anmeldenummer: 12786823.0
(22) Anmeldetag: 27.10.2012
(51) Int. Cl.: F02B 23/06

(54) **VERBRENNUNGSVERFAHREN UND BRENNKRAFTMASCHINE**
COMBUSTION METHOD AND ENGINE
PROCÉDÉ DE COMBUSTION ET MOTEUR À COMBUSTION INTERNE

(30) Priorität: 23.11.2011 DE 102011119215
(43) Veröffentlichungstag der Anmeldung: 01.10.2014
(73) Patentinhaber: Daimler AG, 70327 Stuttgart (DE)
(72) Erfinder: ZÖLLER, Herbert, 70378 Stuttgart (DE); SEDDOUK, Naima, 73734 Esslingen (FR)
(74) Vertreter: JENSEN & SON
(86) Internationale Anmeldenummer: PCT/EP2012/004510
(87) Internationale Veröffentlichungsnummer: WO 2013/075781

(56) Entgegenhaltungen:
- WO-A1-2004/057168
- DE-A1-102009 025 404
- JP-A- 4 153 563
- JP-A- 4 272 447

## Beschreibung

Die vorliegende Erfindung betrifft ein Verbrennungsverfahren mit Selbstzündung für direkt einspritzende Brennkraftmaschinen mit den Merkmalen des Oberbegriffs des Anspruchs 1. Die Erfindung betrifft außerdem eine Brennkraftmaschine, insbesondere für ein Kraftfahrzeug, um ein derartiges Verbrennungsverfahren durchzuführen, mit den Merkmalen des Oberbegriffs des Anspruchs 11.

Die WO 2004/057168 A1 offenbart ein Verbrennungsverfahren mit Selbstzündung für direkt einspritzende Brennkraftmaschinen, wobei die Brennkraftmaschine zumindest einen Zylinder aufweist, dessen Brennraum seitlich von einer Zylinderwand, axial einerseits von einem Zylinderkopf und axial andererseits von einem im Zylinder hubverstellbaren Kolben begrenzt ist. Der Kolben weist eine ringförmig umlaufende, gegenüber einer ringförmig umlaufenden Kolbenkrone axial vertieft im Kolben angeordnete Kolbenstufe auf, die über eine ringförmig umlaufende Strahlteilerkontur in eine zur Kolbenstufe axial vertieft im Kolben angeordnete Kolbenmulde übergeht. Dem jeweiligen Zylinder ist eine Einspritzdüse zugeordnet, die im Zylinderkopf angeordnet ist. Für einen Verbrennungsvorgang im Selbstzündbetrieb werden mittels der Einspritzdüse gleichzeitig mehrere Einspritzstrahlen sternförmig in den Brennraum eingespritzt, bei dem die Einspritzstrahlen an der Strahlteilerkontur jeweils in eine erste Teilmenge, in eine zweite Teilmenge aufgeteilt werden. Die erste Teilmenge tritt in die Kolbenmulde ein, die zweite Teilmenge tritt über die Kolbenstufe in einen Bereich zwischen der Kolbenkrone und Zylinderkopf ein, wobei die erste Teilmenge und die zweite Teilmenge eine erste Verbrennungsfront und eine zweite Verbrennungsfront ausbilden. Bei einer Aufwärtsbewegung des Kolbens wird eine von außen nach innen in die Kolbenmulde gerichtete Quetschströmung erzeugt und eine turbulente Grundströmung innerhalb der Kolbenmulde initiiert, wobei der Kraftstoff zumindest überwiegend in die Kolbenmulde eingespritzt wird. Eine Strömung in der Kolbenmulde hängt davon ab, ob eine drallbehaftete oder dralllose Einlassströmung vorliegt.

Aus der DE 10 2006 020 642 A1 ist eine selbstzündende Brennkraftmaschine zur Realisierung eines derartigen Verbrennungsverfahrens bekannt. Die Brennkraftmaschine weist hierfür zumindest einen Zylinder auf, dessen Brennraum seitlich von einer Zylinderwand, axial einerseits von einem Zylinderkopf und axial andererseits von einem im Zylinder hubverstellbaren Kolben begrenzt ist. Die Zylinderwand definiert eine Längsmittelachse des Zylinders. Ferner umfasst die Brennkraftmaschine je Zylinder eine Einspritzdüse, die koaxial zum Brennraum bzw. im Wesentlichen koaxial zur Längsmittelachse im Zylinderkopf angeordnet ist. Der jeweilige Kolben ist dabei als Stufenkolben ausgestaltet, der eine ringförmig umlaufende, gegenüber einer ringförmig umlaufenden Kolbenkrone axial vertieft im Kolben angeordnete Kolbenstufe aufweist, die über eine ringförmig umlaufende Strahlteilerkontur in eine zur Kolbenstufe axial vertieft im Kolben angeordnete Kolbenmulde übergeht. Die jeweilige Einspritzdüse ist so konzipiert, dass sie für einen Verbrennungsvorgang gleichzeitig mehrere Einspritzstrahlen sternförmig in den Brennraum einspritzen kann. Beim bekannten Verbrennungsverfahren teilen sich die Einspritzstrahlen an der Strahlteilerkontur jeweils in eine erste Teilmenge, die im Wesentlichen in die Kolbenmulde eintritt, und eine zweite Teilmenge, die sich im Wesentlichen über die Kolbenstufe auf die Kolbenkrone in Richtung der Zylinderwand und des Zylinderkopfs ausbreitet. Durch die erste und die zweite Teilmenge werden jeweils eine erste und eine zweite Verbrennungsfront gebildet. Des Weiteren teilen sich die jeweiligen Einspritzstrahlen nach dem Auftreffen auf die Strahlteilerkontur in der Kolbenstufe, jeweils in dritte Teilmengen, die sich ausgehend vom jeweiligen Einspritzstrahl im Wesentlichen beidseitig in der Umfangsrichtung in entgegengesetzten Richtungen entlang der Kolbenstufe ausbreiten. Im weiteren Verlauf des Verbrennungsverfahrens prallen in der Umfangsrichtung jeweils zwischen zwei benachbarten Einspritzstrahlen innerhalb der Kolbenstufe die jeweiligen dritten Teilmengen aufeinander und werden radial nach innen umgelenkt. Ausbildung und Führung dieser dritten Teilmengen werden durch das Auftreffen der Einspritzstrahlen auf die Strahlteilerkontur und die Kolbenstufe hervorgerufen. Infolge der von der Kolbenstufe entfernenden dritten Teilmengen wird eine dritte Verbrennungsfront gebildet, die sich im Wesentlichen radial in eine Lücke ausbreitet, die in der Umfangsrichtung zwischen benachbarten Einspritzstrahlen ausgebildet ist. Ein derartiges Verbrennungsverfahren kann auch als "3-Fronten-Brennverfahren" bezeichnet werden, da sich im Brennraum jeweils für jeden Einspritzstrahl räumlich im Wesentlichen drei Verbrennungs- bzw. Flammenfronten ausbreiten.

Da sich die Verbrennungsfronten den zur Verfügung stehenden Raum im Brennraum effektiv nutzen, wird durch das bekannte Verbrennungsverfahren das im Brennraum zur Verfügung stehende Frischgas bzw. Frischgas-Abgas-Gemisch zu einem hohen Grad ausgenutzt, was insbesondere die Rußbildung während des Verbrennungsvorgangs erheblich reduziert. Des Weiteren werden durch die gegenüber den beiden ersten Verbrennungsfronten zeitverzögert brennende dritte Verbrennungsfront lokale Spitzentemperaturen abgesenkt, so dass die NOx-Bildung vermindert wird.

Zur Ausbildung der dritten Verbrennungsfront treffen die dritten Teilmengen benachbarter Einspritzstrahlen in der Kolbenstufe mit einem großen Impuls aufeinander. Der Impuls der dritten Teilmengen wird aus dem Produkt der Masse der dritten Teilmengen und deren Geschwindigkeit gebildet. Ist der Impuls der dritten Teilmengen ausreichend groß, werden die dritten Teilmengen bei ihrem Aufeinandertreffen in der Kolbenstufe ausgehend den sich von der Kolbenstufe aufgespannten bzw. geöffneten Raum in den Brennraum umgelenkt. Dabei können die jeweiligen zusammen umgelenkten dritten Teilmengen eine dritte Verbrennungsfront ausbilden, die im Wesentlichen in Richtung der Längsmittelachse zwischen den jeweiligen Einspritzstrahlen gerichtet ist. Vorteilhafterweise wird mittels der dritten Verbrennungsfront eine hohe Turbulenz im Brennraum erzeugt, so dass die Verträglichkeit für in den Brennraum rückgeführtes Abgas steigt, wodurch mittels des erhöhten AGR-Anteils im Brennraum die NOx-Emissionen weiter reduziert werden können. Allerdings steht im bekannten Verbrennungsverfahren nur ein kleines Zeitfenster bzw. nur ein kleiner Kurbelwinkel zur Verfügung, um die Einspritzstrahlen an der Strahlteilerkontur in optimal bemessene drei Teilmengen aufzuteilen, so dass lediglich in wenigen Last- und Drehzahlbereichen optimale Bedingungen für die Bildung der dritten Verbrennungsfront vorliegen, wodurch gegenüber konventioneller Dieselverbrennungen insbesondere die Rußemissionen nicht im gewünschten Maß gesenkt werden können.

Die vorliegende Erfindung beschäftigt sich mit dem Problem, für ein selbstzündendes Verbrennungsverfahren bzw. für eine hierfür geeignete Brennkraftmaschine eine verbesserte Ausführungsform anzugeben, die sich insbesondere durch eine verbesserte Aufteilung des eingebrachten Kraftstoffs in die drei Teilmengen auszeichnet. Damit ist es möglich, länger als bisher, bei sich nach unten bewegenden Kolben das Verbrennungsverfahren aufrechterhalten zu können.

Dieses Problem wird bei der vorliegenden Erfindung insbesondere durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Einspritzstrahlen in einem strahlaufwärts der Strahlteilerkontur liegenden Bereich in Richtung Kolben abzulenken. Durch diese Maßnahme können die Einspritzstrahlen während des beginnenden Expansionshubs dem sich vom Zylinderkopf entfernenden Kolben nachgelenkt werden. In der Folge können die Einspritzstrahlen auch bei sich vom Zylinderkopf entfernenden Kolben weiterhin auf die Strahlteilerkontur bzw. im Bereich der Strahlteilerkontur auf den Kolben auftreffen, um weiterhin den jeweiligen Einspritzstrahl in drei Teilmengen aufzuteilen. Hierdurch steht der optimalen Aufteilung der jeweiligen Einspritzstrahlen eine größere Zeitspanne bzw. ein erweiterter Kurbelwellenwinkel zur Verfügung. Durch Variation von Einspritzdauer, -Druck und -Timing, insbesondere des Einspritzbeginns, können dritte Teilmengen mit ausreichend großer Kraftstoffmasse und Kraftstoffgeschwindigkeit und damit mit einem ausreichend großen dritten Teilmengen innewohnenden Impuls über einen erweiterten Kennfeldbereich reproduzierbar erzeugt werden, so dass die dritte Verbrennungsfront sich in einer Lücke zwischen zwei benachbarten Einspritzstrahlen ausbilden und somit im Brennraum räumlich verteilte Verbrennungsluft bzw. Verbrennungsluft-Abgas-Gemisches optimiert ausnutzen kann, wodurch insbesondere die Rußemissionen gesenkt werden können. Des Weiteren wird mit dem erfindungsgemäßen Nachlenken des Einspritzstrahls die Benetzung der Zylinderwand mit Kraftstoff der zweiten Teilmenge zumindest stark vermindert, da der Einspritzstrahl im Wesentlichen auf die Strahlteilerkontur bzw. auf angrenzende Bereiche des Kolbens trifft und nicht die Kolbenkrone überstreicht und direkt auf die Zylinderwand auftrifft. Darüber hinaus wird mittels der Kolbenstufe von den jeweiligen Einspritzstrahlen die dritten Teilmengen abgetrennt, so dass der zweiten Teilmenge weniger Kraftstoff zur Verfügung steht, wodurch der der zweiten Teilmenge innewohnende Impuls kleiner wird und damit die Eindringtiefe der zweiten Teilmenge reduziert wird. Außerdem führt die axiale Ablenkung der zweiten Teilmenge in der Kolbenstufe zum Zylinderkopf hin zu einem Aufstauen der zweiten Teilmenge zwischen dem Zylinderkopf und dem Kolben, so dass der durch die Einspritzung nachströmende Kraftstoff in die zweite Verbrennungsfront vermindert wird, wodurch die radiale Ausbreitung der zweiten Teilmenge bzw. der zweiten Verbrennungsfront gebremst wird. Vorteilhafterweise kann mittels dieser zwei Effekte Berührung der zweiten Verbrennungsfront mit dem relativ kalten Zylinder bzw. der Zylinderwand minimiert werden, so das unerwünschter Wärmeübergang zwischen der zweiten Verbrennungsfront mit der Zylinderwand stark gesenkt werden, wodurch Rußbildung aus der zweiten Verbrennungsfront an der relativ kalten Zylinderwand vermindert werden kann. Darüber hinaus können Abwaschung von Öl von der Zylinderwand und ein Eintrag von Ruß in das Motorenöl verringert werden.

Gemäß der vorliegenden Erfindung wird mittels einer Quetschspaltströmung und einer Drallströmung und einer Strahlströmung eine resultierende Strömung erzeugt, deren Strömungsvektor zumindest einen wesentlichen Anteil umfasst, der sich oberhalb der Kolbenmulde koaxial zur Längsmittelachse des Zylinders in Richtung der Kolbenmulde ausbildet. Hierbei wird die Quetschspaltströmung zwischen der Kolbenkrone und dem Zylinderkopf ausgebildet und ist im Wesentlichen von der Zylinderwand in Richtung Zylindermitte gerichtet. Die Drallströmung bzw. der Drall der Verbrennungsluft strömt im Wesentlichen um die Längsmittelachse des Zylinders. Die Strahlströmung bildet sich im Zuge des im Brennraum ausbreitenden Einspritzstrahls aus, wobei die den Einspritzstrahl umgebende Verbrennungsluft in Richtung des Einspritzstrahls mitgerissen wird. Die resultierende Strömung trifft auf die Einspritzstrahlen oberhalb der Kolbenmulde, zur Strahlteilerkontur radial nach innen versetzt, also strahlaufwärts der Strahlteilerkontur, und lenkt diese in Richtung Kolben ab.

Im jeweiligen Zylinder im oberen Totpunkt des Kolbens axial zwischen der Kolbenkrone und dem Zylinderkopf kann ein Quetschspalt vorliegen, der im oberen Totpunkt des Kolbens axial zwischen der Kolbenkrone und dem Zylinderkopf eine axiale Höhe in einem Bereich von etwa 0,2% bis etwa 3,0% des Kolbendurchmessers, vorzugsweise in einem Bereich von etwa 0,4% bis etwa 1,2% des Kolbendurchmessers, aufweist und/oder dessen radiale Länge in einem Bereich von etwa 6% bis etwa 22% des Kolbendurchmessers, vorzugsweise in einem Bereich von etwa 9% bis etwa 14% des Kolbendurchmessers, aufweist. Diese Abmessungen des Quetschspalts haben sich als besonders vorteilhaft zur Erzeugung einer Quetschspaltströmung herausgestellt, die sich zum Erzeugen der resultierenden Strömung eignet.

Die Drallströmung lässt sich innerhalb der Verbrennungsluft im Brennraum durch eine entsprechende Anordnung und/oder Ausrichtung der Einlassöffnungen und/oder der Einlasskanäle und/oder durch eine entsprechende Konturierung im Bereich der Ventilsitze der Einlassventile generieren. Es ist auch bekannt, mittels Drallklappen im Einlasskanal oder einer Kombination aus Drallklappen und einer oben genannten Vorrichtung einen Drall zu erzeugen. Mit Hilfe des Dralls der Verbrennungsluft kann eine resultierende Strömung gebildet werden, die die Einspritzstrahlen in Richtung Kolben nachlenkt. Des Weiteren wird insbesondere die Durchmischung von Verbrennungsluft und rückgeführtem Abgas verbessert, da die Ladung im Zylinder mittels der Drallströmung um die Längsmittelachse herum bewegt wird.

Die Einspritzlöcher sind konisch ausgestaltet und verjüngen sich von der Einlassseite zur Auslassseite. Vorteilhafterweise kann mittels der konischen Einspritzlöcher ein langgezogener, relativ schmaler, keulenförmiger Einspritzstrahl mit einer großen Ausbreitungsgeschwindigkeit erzeugt werden, so dass sich der Einspritzstrahl im Brennraum nur gering aufweitet, wodurch der Einspritzstrahl mit einem hohen Impuls auf die Strahlteilerkontur auftreffen kann.

Gemäß einer vorteilhaften Ausführungsform werden die Einspritzstrahlen eingespritzt, so dass die Einspritzstrahlen zuerst außermittig, nämlich zur Kolbenmulde hin versetzt auf die Strahlteilerkontur treffen, im Lauf der Einspritzung die Mitte der Strahlteilkontur überstreichen und schließlich auf die Strahlteilkontur zur Kolbenstufe hin versetzt auftreffen. Mit anderen Worten, die sich ausbreitenden Einspritzstrahlen treffen zuerst nicht auf die Strahlteilerkontur zur Kolbenstufe hin versetzt auf die Strahlteilerkontur, sondern erst im weiteren Verlauf der Einspritzung, so dass die eingespritzte Kraftstoffmenge optimal in eine erste Teilmenge, eine zweite Teilmenge und dritte Teilmengen aufgeteilt werden kann, wodurch insbesondere die dritten Teilmengen einen ausreichend hohen Impuls erhalten und sich beim Aufeinanderprallen als dritte Verbrennungsfront ausbilden können. Dies ändert sich nicht mit dem Expansionshub des Kolbens, der sich vom Zylinderkopf wegbewegt, sondern es verbleibt die erfindungsgemäße Ablenkung der Einspritzstrahlen in Richtung Kolben im Wesentlichen außermittig, zur Kolbenstufe versetzt, wodurch eine möglichst große Kraftstoffmasse mit hoher Geschwindigkeit in die Kolbenstufe tritt und sich in dritten Teilmengen in Umfangsrichtung in der Kolbenstufe ausbreitet.

Gemäß einer vorteilhaften Ausführungsform werden die Einspritzstrahlen so eingespritzt, dass die Einspritzstrahlen zunächst außermittig, nämlich zur Kolbenmulde hin versetzt auf die Strahlteilerkontur treffen und später im Verlauf der Einspritzung bei nach unten bewegenden Kolben auf die Strahlteilkontur auftreffen. Dies gilt für Einspritzmengen, die in Abhängigkeit des Einspritzdrucks, kurze Einspritzdauern aufweisen, so dass der Einspritzstrahl am Ende seiner Einspritzdauer auf die Strahlteilkontur auftrifft. Vorteilhafterweise wirkt auch bei kleineren Einspritzmengen die erfindungsgemäße resultierende Strömung auf den Einspritzstrahl, wodurch die eingespritzte Kraftstoffmenge weiterhin optimal in erste Teilmenge, zweite Teilmenge und dritte Teilmengen aufgeteilt werden kann.

Gemäß einer weiteren vorteilhaften Ausführungsform können mit Hilfe der jeweiligen Einspritzdüse gleichzeitig 7 bis 12, vorzugsweise 10 bis 12, insbesondere 10,

Einspritzstrahlen gleichzeitig erzeugt werden. Durch die genannte Anzahl an Einspritzstrahlen ergibt sich ein kleiner Winkel zwischen den Einspritzstrahlen, so dass die an der Kolbenstufe aufeinander sich zubewegenden, benachbarten Stufenstrahlen vergleichsweise kurze Wegstrecken in der Kolbenstufe zurücklegen müssen, wodurch die dritten Teilmengen wenig an Geschwindigkeit verlieren und mit einem besonders hohen Impuls kollidieren und die dritte Verbrennungsfront besonders effektiv ausgebildet werden kann.

Besonders zweckmäßig ist eine Ausführungsform, bei welcher der jeweilige Einspritzstrahl während einer Einspritzzeitdauer von maximal 40° Kurbelwellenwinkel eingebracht wird. Hierdurch lässt sich eine besonders stabile Verbrennung realisieren, da sich die drei vorgenannten Flammenfronten hierdurch besonders zuverlässig realisieren lassen.

Entsprechend einer anderen vorteilhaften Ausführungsform können die Einspritzstrahlen bspw. mit einem Strahlkegelwinkel eingespritzt werden, der in einem Winkelbereich von etwa 140° bis etwa 160° und vorzugsweise bei etwa 152° liegt.

Besonders vorteilhaft ist es, wenn der Strahlkegelwinkel im Wesentlichen koaxial zur Längsmittelachse des Zylinders sich ausbreitet, so dass die Einspritzstrahlen jeweils auf der gleichen Höhe der Strahlteilerkontur treffen, wodurch die dritten Verbrennungsfronten sich gleichmäßig zueinander im Brennraum ausbreiten können.

In einer weiteren vorteilhaften Ausführungsform werden die Einspritzstrahlen mit einem Einspritzdruck von 500 bar bis 2800 bar in den Brennraum eingebracht. Vorteilhafterweise weisen die Einspritzstrahlen beim Abspritzen in den Brennraum eine hohe Geschwindigkeit auf, so dass die Einspritzstrahlen einen hohen Impuls innehaben, wodurch die Ausbildung der dritten Verbrennungsfront erleichtert wird.

In einer besonders vorteilhaften Ausführung werden die ersten Teilmengen in einem Hinterschnitt der Kolbenmulde abgelenkt. Damit steht die Strahlteilkontur radial nach innen über eine außen liegende Wand der Kolbenmulde vor. Die ersten Teilmengen bzw. die erste Verbrennungsfront der jeweiligen Einspritzstrahlen strömen ausgehend von der Strahlteilerkontur über den Hinterschnitt in Richtung der Kolbenmitte. Vorteilhafterweise verlassen die ersten Teilmengen am Übergang des Hinterschnitts in den Kolbenmuldenboden bzw. einem Kolbenkegel dank der verbesserten Umlenkung im wesentlichen Tangential den Hinterschnitt in Richtung der Längsmittelachse, so dass sich eine verbesserte Verteilung der ersten Teilmengen in der Verbrennungsluft in der Kolbenmulde ergibt, wodurch sich die Effektivität der Verbrennung steigern lässt und die Emissionen weiter sinken.

In einer besonderen Ausführung des Hinterschnitts beträgt dieser bis zu 3% eines Kolbendurchmessers.

Zur Erzeugung einer mit Drall beaufschlagten Ladung aus Frischluft oder aus Frischluft und rückgeführtem Abgas im Brennraum nach einem Ladungswechsel kann die Brennkraftmaschine mit geeignetem Drallerzeugungsmittel ausgestattet sein. Derartige Drallerzeugungsmittel sind z. B. die vorstehend genannten Maßnahmen.

Der Drall in der Ladung kann bspw. mit einem iTheta bis maximal 4,5 erzeugt werden. Dabei kann insbesondere bei Nfz-Motoren ein vergleichsweise kleiner Drall von 0,3 bis 2,5 ausreichen, die gewünschte resultierende Strömung zu erzeugen. Bei hubraumkleineren Motoren kann ein höherer Drall von bis zu 4,5 zielführend sein.

In einer besonderen Ausführungsform kann der Drall veränderbar sein. Dadurch kann der Drall in Vorteilhafterweise den Betriebsbedingungen angepasst werden, so dass weitere Freiheitsgrade bezüglich des Nachlenkens der Einspritzstrahlen gewonnen werden können, wodurch das erfinderische Nachlenken der Einspritzstrahlen in einem erweiterten Kennfeldbereich zur Stabilisierung des Nachlenkens verwendbar ist. Beispielsweise kann der Drall bei hubraumkleineren Motoren in der Teillast angehoben werden und in der Volllast gesenkt werden.

In einer weiteren vorteilhaften Ausführungsform weist die Kolbenstufe eine radiale Ausdehnung von 4% bis etwa 20% eines Kolbendurchmessers und eine axiale Höhe von etwa 2,5% bis 7% des Kolbendurchmessers auf. Es hat sich herausgestellt, dass bei dieser Ausführung der Kolbenstufe besonders effektiv die dritte Verbrennungsfront ausgebildet werden kann.

In einer weiteren vorteilhaften Ausführungsform weisen die Einspritzlöcher der Einspritzdüse zur Erzeugung der Einspritzstrahlen ein Verhältnis von Lochlänge zu Lochdurchmesser auf, das in einem Bereich von etwa 3 bis etwa 11 und vorzugsweise in einem Bereich von etwa 4 bis etwa 8 liegt.

In einer weiteren vorteilhaften Ausführungsform weisen die Einspritzlöcher an einer vom Brennraum abgewandten Einlassseite eine Verrundung auf. Mittels der Verrundung, insbesondere einer hydraulisch erosiv erzeugten Verrundung, wird eine Durchflusserhöhung in einem Bereich von 5% bis 25% erreicht, vorzugsweise in einem Bereich von 10% bis 20% erreicht.

In einer besonderen Ausführungsform der konischen Einspritzlöcher ist ein Lochdurchmesser an der Einlassseite, ggf. stromab der Verrundung, in einem Bereich von etwa 2% bis etwa 25%, vorzugsweise in einem Bereich von etwa 5% bis etwa 15%, größer ist als ein Lochdurchmesser an der Auslassseite ausgeführt.

In einer weiteren vorteilhaften Ausführungsform ist der Kolben außerdem mit einem Kolbenkegel ausgestattet, der sich koaxial und zentral in der Kolbenmulde befindet. Zweckmäßigerweise besitzt der Kolbenkegel einen Kegelwinkel, der kleiner ist als ein Einspritzkegelwinkel der Einspritzstrahlen. Bspw. kann der Kegelwinkel bei etwa 124° ± 10°, insbesondere bei etwa 124° ± 5°, liegen. Eine Kegelspitze des Kolbenkegels, durch welche die Längsmittelachse des Kolbens bzw. des Zylinders verläuft, ist bzgl. der Kolbenkrone und vorzugsweise auch bzgl. der Kolbenstufe axial zum Kolben hin versetzt angeordnet, d. h. die Kegelspitze ist gegenüber der Kolbenkrone und insbesondere auch gegenüber der Kolbenstufe axial vertieft im Kolben angeordnet.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen Längsschnitt durch eine Brennkraftmaschine im Bereich eines Zylinders,
- Fig. 2: eine axiale Draufsicht auf einen Kolben,
- Fig. 3a, 3b, 3c: ein vereinfachter Halblängsschnitt des Kolbens aus Fig. 1 bei verschiedenen Zuständen a bis c eines Verbrennungsverfahrens,
- Fig. 4a, 4b, 4c: Ausschnitte der Draufsicht aus Fig. 2 bei verschiedenen Zuständen a bis c des Verbrennungsverfahrens,
- Fig. 5: einen stark vereinfachten Längsschnitt durch eine Einspritzdüse im Bereich eines Einspritzlochs.

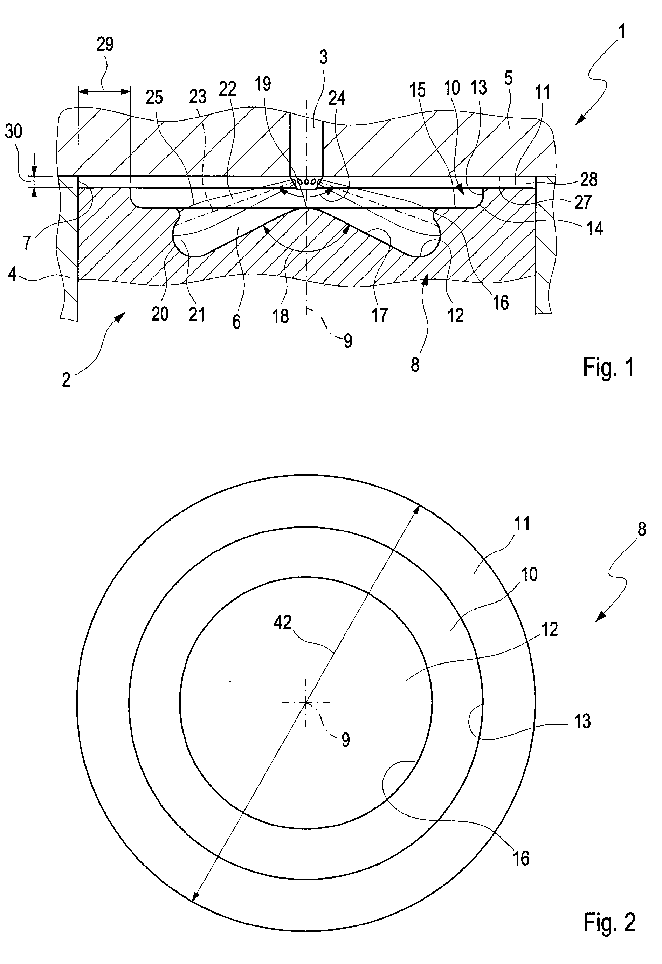

Entsprechend Fig. 1 umfasst eine Brennkraftmaschine 1, die insbesondere in einem Kraftfahrzeug, und zwar sowohl in einem Nutzfahrzeug als auch in einem Personenkraftwagen, zur Anwendung kommen kann, zumindest einen Zylinder 2 und eine Einspritzdüse 3 eines nicht näher dargestellten Injektors je Zylinder 2. Die Brennkraftmaschine 1 ist in Fig. 1 nur im Bereich eines derartigen Zylinders 2 dargestellt. Grundsätzlich kann die Brennkraftmaschine 1 auch mehr als einen Zylinder 2 aufweisen. Der jeweilige Zylinder 2 ist in einem Kurbelgehäuse 4 ausgebildet, an dem in üblicher Weise ein Zylinderkopf 5 angeordnet ist.

Im jeweiligen Zylinder 2 ist ein Brennraum 6 seitlich von einer Zylinderwand 7 und axial einerseits vom Zylinderkopf 5 und axial andererseits von einem Kolben 8 begrenzt, der im Zylinder 2 hubverstellbar angeordnet ist. Die zylindrische Zylinderwand 7 definiert eine Längsmittelachse 9 des Zylinders 2. Die Einspritzdüse 3 ist im Beispiel koaxial zum Brennraum 6 im Zylinderkopf 5 angeordnet.

Entsprechend den Figuren 1 und 2 ist der Kolben 8 als Stufenkolben ausgestaltet. Ein derartiger Stufenkolben 8 weist eine bezüglich der Längsmittelachse 9 ringförmig umlaufende Kolbenstufe 10, eine bezüglich der Längsmittelachse 9 ringförmig umlaufende Kolbenkrone 11 sowie eine bezüglich der Längsmittelachse 9 koaxial angeordnete Kolbenmulde 12 auf. Die Kolbenstufe 10 ist dabei gegenüber der Kolbenkrone 11 axial vertieft im Kolben 8 ausgebildet. Die Kolbenmulde 12 ist gegenüber der Kolbenstufe 10 axial vertieft im Kolben 8 ausgebildet. Der Querschnitt der Kolbenstufe 10 ist winklig ausgeführt und weist axial eine umlaufende Stufenwand 13 auf, die über eine konkav gekrümmte Übergangswand 14 in einen radial ebenen Stufenboden 15 übergeht. Die Stufenwand 13 geht in die ebene Kolbenkrone 11 über. An den Stufenboden 15 schließt sich ein abgerundeter Kantenbereich, im Folgenden Strahlteilerkontur 16 bezeichnet, an, die in die tiefer liegende Kolbenmulde 12 übergeht. Sowohl die Stufenwand 13, die Übergangswand 14, der Stufenboden 15 als auch die Strahlteilerkontur 16 sind bezüglich der Längsmittelachse 9 ringförmig, insbesondere kreisförmig, umlaufend ausgestaltet.

Der Kolben 8 weist außerdem einen Kolbenkegel 17 auf, der koaxial und konzentrisch innerhalb der Kolbenmulde 12 angeformt ist. Der Kolbenkegel 17 besitzt einen Kegelwinkel 18 und verjüngt sich in Richtung zum Zylinderkopf 5 hin. Eine Kegelspitze 19 ist gegenüber der Kolbenkrone 11 vertieft im Kolben 8 angeordnet. Im Ausführungsbeispiel erstreckt sich die Kolbenkrone 11 in einer senkrecht zur Längsmittelachse 9 verlaufenden Ebene. Auch die Kolbenstufe 10 erstreckt sich entlang ihres wesentlichen Bereichs in einer Ebene, die senkrecht auf der Längsmittelachse 9 steht.

Im Ausführungsbeispiel gemäß Fig. 1 steht die Strahlteilerkontur 16 radial nach innen zeigend über eine radial äußere Außenwand 20 der Kolbenmulde 12 etwas hervor. Somit weist die Kolbenmulde 12 einen Hinterschnitt 21 gegenüber der Strahlteilerkontur 16 auf.

Die Strahlteilerkontur 16 ist in Form eines abgerundeten, ringförmig umlaufenden Vorsprungs zwischen den Stufenboden 15 und der Außenwand 20 der Kolbenmulde 12 ausgebildet. Ist kein Hinterschnitt 21 vorgesehen, so kann die Strahlteilkontur 16 auch als abgerundete, ringförmig umlaufende, im Wesentlichen einen rechtwinkligen Querschnitt aufweisenden, Kante zwischen Stufenboden 15 und Außenwand 20 der Kolbenmulde 12 ausgebildet sein.

Wie die Fig. 1 zeigt, ist die Einspritzdüse 3 so konzipiert, dass sie gleichzeitig mehrere Einspritzstrahlen 22 erzeugen kann, die sich sternförmig bzgl. der Längsmittelachse 9 von der Einspritzdüse 3 im Wesentlichen radial in den Brennraum 6 hinein ausbreiten. Wesentlich ist, dass sich die Einspritzstrahlen 22 in zunehmender radialer Entfernung koaxial zur Längsmittelachse 9 ausbreiten. Der jeweilige Einspritzstrahl 22 tritt entlang einer geneigten Längsmittelachse 23 auf, welche eine Ausbreitungsrichtung des jeweiligen Einspritzstrahls 22 definiert. Die Gesamtheit der Einspritzstrahlen 22 besitzt eine Kegelkontur, die einen Strahlkegelwinkel 24 aufweist. Die einzelnen Einspritzstrahlen 22 breiten sich im Brennraum 6 jeweils keulenförmig aus. Eine entsprechende Keulenkontur ist in Fig. 1 mit dem Bezugszeichen 25 bezeichnet. Für die nachfolgende Betrachtung werden die einzelnen Einspritzstrahlen 22 sowie die daraus resultierenden weiteren Strahlen bzw. Teilmengen vereinfacht als Pfeile dargestellt. Es ist klar, dass der Einspritzstrahl 22 und die aus dem Einspritzstrahl 22 abtrennenden, einzelnen Teilmengen jeweils eine sich ausbreitende Kraftstoffdampfwolke bzw. eine Wolke aus Verbrennungsluft und Kraftstoff repräsentieren, die zumindest an ihrer Außenseite bereits mit dem Sauerstoff des Brennraums 6 reagieren kann und so eine Flammenfront bzw. ein brennendes Kraftstoff-LuftGemisch bildet. Es ist außerdem klar, dass der Einspritzstrahl 22 im Wesentlichen entlang seiner Längsmittelachse 23 Kraftstoff zunächst in weitgehend flüssiger Form mit sich führt und nur an seinen Rändern mit der Verbrennungsluft im Brennraum 6 ein Luft-Kraftstoff-Gemisch bildet, wobei der flüssige Kraftstoff im Laufe des Verbrennungsvorgangs weiter verdampft und sich mit der Verbrennungsluft mischt.

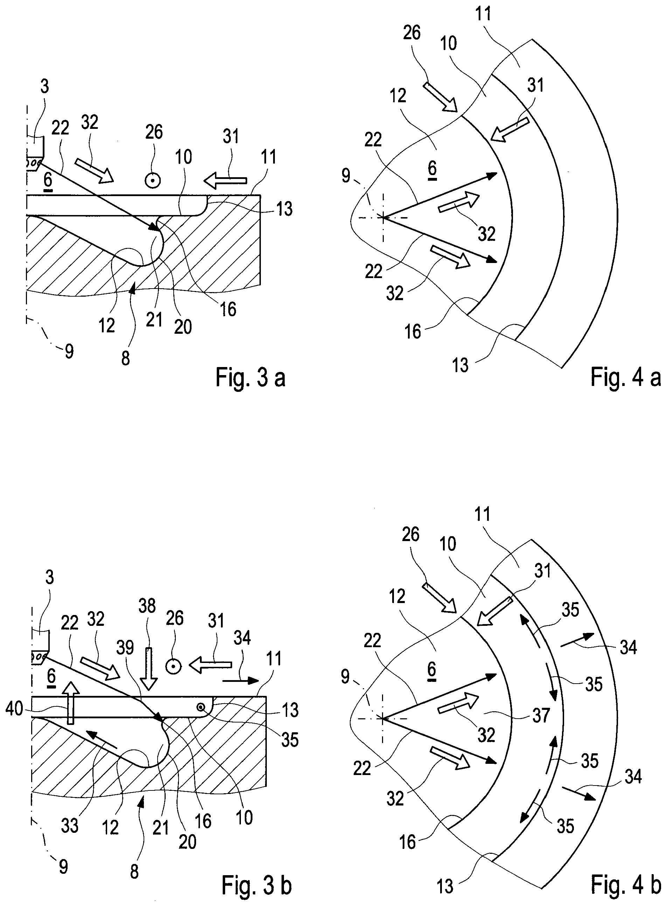

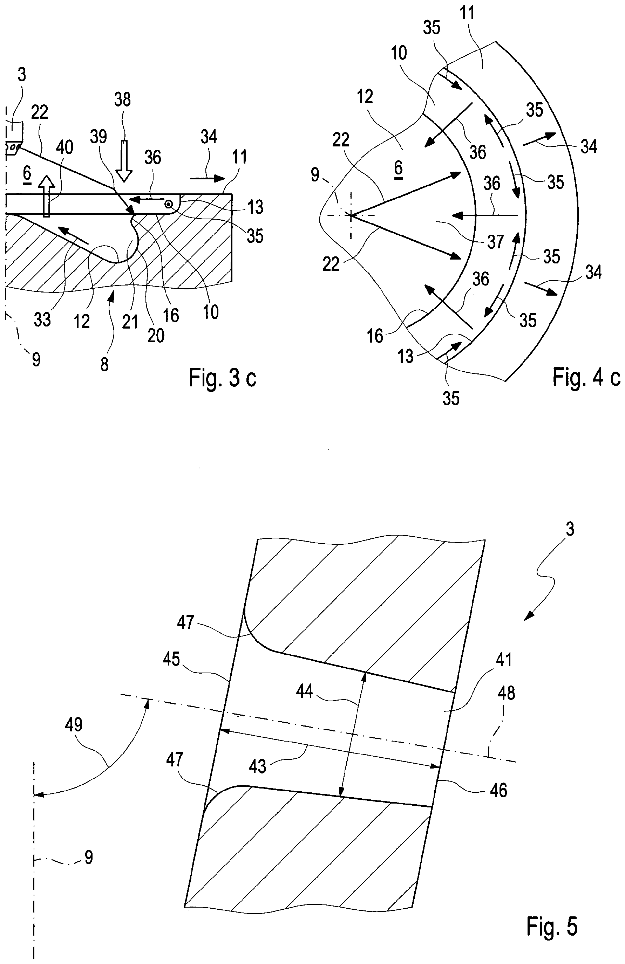

Nachfolgend wird insbesondere mit Bezug auf die Figuren 3 und 4 das erfindungsgemäße Verbrennungsverfahren, das mit Selbstzündung, insbesondere mit Dieselkraftstoff oder Ähnlichen arbeitet, näher erläutert. Zur Vorbereitung des Verbrennungsvorgangs erfolgt im jeweiligen Zylinder 2 in herkömmlicher Weise ein Ladungswechsel, so dass im jeweiligen Brennraum 6 anschließend eine Ladung aus Frischluft oder eine Ladung aus Frischluft und rückgeführtem Abgas vorliegt. Die Ladung aus Frischluft bzw. aus Frischluft und rückgeführtem Abgas im Brennraum 6 ist außerdem mit einem Drall 26 beaufschlagt, der in den Figuren 4a bis 4c durch einen Blockpfeil angedeutet ist. Der Drall 26 bzw. die Drallströmung entspricht somit einer Rotation der Ladung um die Längsmittelachse 9, also einer Strömung in Umfangsrichtung. Im Weiteren werden alle Strömungen bzw. die wesentlichen Richtungsvektoren der einzelnen Strömungen der Ladung im Brennraum 6 mit Blockpfeilen symbolisiert. Im Weiteren wird der eingespritzte Kraftstoff, also der Einspritzstrahl 22 und die daraus sich abtrennenden Teilmengen, durch einfache Pfeile symbolisiert. Die Pfeile symbolisieren die wesentlichen Richtungsvektoren.

Wie in Fig. 1 gezeigt, nähert sich der Kolben 8 im Kompressionshub maximal an den Zylinderkopf 5 an, wodurch axial zwischen der Kolbenkrone 11 und einem der Kolbenkrone 11 axial gegenüberliegenden Ringbereich 27 des Zylinderkopfs 5 ein Quetschspalt 28 entsteht, der eine radial gemessene Quetschspaltlänge 29 und eine axial gemessene Quetschspalthöhe 30 aufweist. Die Quetschspaltlänge 29 entspricht dabei im Wesentlichen dem Radialabstand zwischen der Zylinderwand 7 und der Stufenwand 13. Die Quetschspalthöhe 30 entspricht dabei den Axialabstand zwischen dem Ringbereich 27 und der Kolbenkrone 11 im oberen Totpunkt des Kolbens 8.

Im Bereich des oberen Totpunkts erzeugt der Kolben 8 in seiner Bewegung zum Zylinderkopf 5 hin eine an sich bekannte Quetschspaltströmung 31, die in den Figuren 3a bis 3c durch einen Blockpfeil angedeutet ist. Die Quetschspaltströmung 31 ist im Wesentlichen radial in Richtung der Längsachse 9 hin ausgerichtet. Es ist klar, dass bei einem sich nach vom Zylinderkopf 5 wegbewegenden Kolben 8 keine Quetschspaltströmung 31 entstehen kann. Allerdings ist auf Grund der Massenträgheit der Ladung im Brennraum 6 bzw. des Anteils der Ladung im Brennraum 6, die von der Quetschspaltströmung 31 beaufschlagt wird, bei abwärts strebenden Kolben 8 die im Kompressionshub gebildete Quetschspaltströmung 31 weiter vorhanden und ist zumindest bis zum Ende der Einspritzung wirksam.

Entsprechend den Figuren 3a und 4a erzeugt die Einspritzdüse 3 für einen Verbrennungsvorgang im Selbstzündbetrieb gleichzeitig mehrere Einspritzstrahlen 22, die sich sternförmig in den Brennraum 6 hinein ausbreiten. Die Einspritzstrahlen 22 sind dabei hinsichtlich des Strahlkegelwinkels 24 auf die Stellung des Kolbens 8 im Einspritzzeitpunkt abgestimmt, derart dass die Einspritzstrahlen 22 außermittig, nämlich zum Hinterschnitt 21 bzw. zur Außenwand 20 der Kolbenmulde 12 hin versetzt, nicht direkt auf die Strahlteilerkontur 16 auftreffen, so dass sie im Bereich zwischen Außenwand 20 und Strahlteilkontur 16 liegen. In Fig. 1 wird dies durch die Längsmittelachse 23 der Einspritzstrahlen 22 bei Beginn des Auftreffens der Einspritzstrahlen 22 auf die Strahlteilerkontur 16 deutlich gezeigt. Zu diesem Zeitpunkt liegen die Drallströmung 26, die Quetschspaltströmung 31 und eine Strahlströmung 32 im Brennraum 6 vor. Die Strahlströmung 32 ist eine Strömung der Ladung, die durch ein Mitreißen der die Einspritzstrahlen 22 umgebenden Verbrennungsluft entsteht. Die Strahlströmung 32 ist durch einen Blockpfeil zwischen dem Einspritzstrahl 22 und dem Zylinderkopf 5 symbolisiert und weist einen deutlichen Richtungsvektor auf, der im Wesentlichen parallel zur Längsmittelachse 23 des Einspritzstrahls 22 verläuft. Der Drall 26 weist einen deutlichen Richtungsvektor auf, der tangential zur Längsmittelachse 9 bzw. zu Kolben 8 gerichtet ist, symbolisiert durch seinen Blockpfeil. Die Quetschspaltströmung 31 weist einen deutlichen Richtungsvektor auf, der quer zur Richtung der Längsmittelachse 9 verläuft ist, symbolisiert durch seinen Blockpfeil.

Gemäß den Figuren 3b und 4b wird der auf die Strahlteilerkontur 16 auftreffende Einspritzstrahl 22 im weiteren Verlauf der Einspritzung in eine erste Teilmenge 33, eine zweite Teilmenge 34 und dritte Teilmengen 35 aufgeteilt. Dabei hat sich der Kolben 8 weiter vom Zylinderkopf 5 bzw. der Einspritzdüse 3 entfernt, so dass der Einspritzstrahl 22 bei seinem Auftreffen auf die Strahlteilerkontur 16 nunmehr in Richtung Mitte der Strahlteilerkontur 16 bzw. zum Stufenboden 15 hin wandert. Die erste Teilmenge 33 tritt dabei in die Kolbenmulde 12 ein. Die zweite Teilmenge 34 strömt über die Kolbenstufe 10 auf die Kolbenkrone 11 hinauf in Richtung der Zylinderwand 7 und des Zylinderkopf 5 bzw. den Ringbereich 27 des Zylinderkopfes 5. Die dritten Teilmengen 35 strömen in der Kolbenstufe 10 ausgehend von der Längsmittelachse 23 des Einspritzstrahls 22 zueinander entgegengesetzt in der Kolbenstufe 10 entlang. Die dritten Teilmengen 35 strömen bei Auftreffen auf die Stufenwand 13 aufgeteilt aus dem Einspritzstrahl 22 nach links und nach rechts ab. In den Figuren 3b bis 3c sind die wesentlichen Richtungsvektoren der dritten Teilmengen 35 durch große Punkte dargestellt und der Wesentliche Richtungsvektor des Dralls 26 durch einen Kreis mit einem Punkt in der Mitte. In den Figuren 4b und 4c sind dabei die ersten Teilmengen 33 der Übersichtlichkeit halber nicht dargestellt. Die erste Teilmenge 33 bildet eine erste wesentliche Flammenfront im Brennraum 6. Die zweite Teilmenge 34 bildet eine zweite wesentliche Flammenfront im Brennraum 6. Dabei hat sich der vom Einspritzstrahl 22 abgetrennte Kraftstoff im Wesentlichen mit der Verbrennungsluft im Brennraum 6 vermischt und entzündet.

Gemäß Fig. 4c können nun im weiteren Verbrennungsablauf zwei in der Umfangsrichtung benachbarten Einspritzstrahlen 22 innerhalb der Kolbenstufe 10 eine dritte Teilmenge 35 des einen Einspritzspritzstrahls 22 und eine dritte Teilmenge 35 des benachbarten Einspritzstrahls 22 in der Umfangsrichtung aufeinanderprallen und sich zu einer dritten Verbrennungsfront 36 vereinen, der sich radial von der Stufenwand 13 der Kolbenstufe 10 weg, radial nach innen in eine Lücke 37 ausbreitet, die sich in der Umfangsrichtung zwischen je zwei benachbarten Einspritzstrahlen 22 ausbildet. Die sich vereinigenden dritten Teilmengen 35 zweier benachbarter Einspritzstrahlen 22 bilden die dritte wesentliche Flammenfront im Brennraum 6 aus.

Somit liegen im Brennraum 6 insgesamt drei wesentliche, sich räumlich ausbreitende Flammenfronten vor, so dass das Verbrennungsverfahren folgerichtig als 3-Fronten-Brennverfahren bezeichnet werden kann.

Zur stabilen Ausbildung der dritten Verbrennungsfront 36 ist es wichtig, dass die dritten Teilmengen 35 genügend Kraftstoffmasse und eine hohe Geschwindigkeit für einen ausreichend hohen Impuls aufweisen. Dies wird durch ein erfindungsgemäßes Nachlenken des Einspritzstrahls 22 von dem sich zum Zylinderkopf 5 wegbewegenden Kolbens 8 unterstützt. Durch das Nachlenken kann der durch den Einspritzstrahl 22 in den Brennraum 6 eingebrachte Kraftstoff weiterhin so auf die Strahlteilkontur 16 auftreffen, dass der Kraftstoff optimal für die Ausbildung der drei Teilmengen 33, 34, 35 aufgeteilt werden kann. Aus den jeweiligen wesentlichen Richtungsvektoren des Dralls 26, der Quetschspaltströmung 31 und der Strahlströmung 32 ergibt sich erfindungsgemäß eine resultierende Strömung 38. Die resultierende Strömung 38 weist zumindest einen wesentlichen Richtungsvektor bzw. eine wesentliche Strömungskomponente auf, die sich im Bereich zwischen Einspritzstrahlen 22 und dem Zylinderkopf 5 ausbildet, in den Figuren 3b und 3c symbolisiert durch einen Blockpfeil 38. Die resultierende Strömung 38 trifft gemäß den Figuren 3b und 3c stromauf bzw. strahlauf der Strahlteilerkontur 16 nun genau auf den jeweiligen Einspritzstrahl 22 und lenkt diesen in Richtung zum Kolben 8 hin ab. Hierdurch kann der Einspritzstrahl 22 hinsichtlich seines Auftreffens auf die Strahlteilerkontur 16 gewissermaßen durch die resultierende Strömung 38 nachgelenkt der Bewegung des Kolbens 8 folgen, der sich bereits in seinem Expansionshub befindet und sich dementsprechend immer weiter vom Zylinderkopf 5 entfernt. Die hier realisierte strömungsdynamische Nachführung bzw. Ablenkung der Einspritzstrahlen 21 in Richtung Kolben 8 erfolgt dabei zeitlich nach dem ersten Auftreffen der Einspritzstrahlen 22 auf die Strahlteilerkontur 16 immer zur richtigen Zeit.

Zur Verdeutlichung der verschiedenen Strömungen 26, 31 und 32 und der daraus entstehenden resultierenden Strömung 38 bzw. dem in den Figuren 3b und 3c dargestellten wesentlichen Richtungsvektor sind in Fig. 3b alle Strömungen 26, 31, 32 und 38 in der Darstellung der Blockpfeile gezeigt. Der Übersichtlichkeit halber ist in Fig. 3c nur die erfindungswesentliche resultierende Strömung 38 eingezeichnet und in Fig.4c keine Strömung eingezeichnet. Die resultierende Strömung 38 bewirkt, dass die Einspritzstrahlen 22 dem sich vom Zylinderkopf 5 bzw. der Einspritzdüse 3 entfernenden Kolben 8 nachgelenkt wird, indem der Einspritzstrahl 22 mittels der resultierenden Strömung 38 strahlauf der Strahlteilerkontur 16 in Richtung Kolben 8 abgelenkt bzw. gekrümmt wird. In den Figuren 3b und 3c ist jeweils die kontinuierliche Krümmung des Einspritzstrahls 22 der Übersichtlichkeit halber durch einen Strahlknick 39 symbolisiert.

Hervorzuheben ist, dass das 3-Fronten-Brennverfahren ein Verbrennungsablauf gewährleistet, bei dem drei Verbrennungsfronten 33, 34, 36 kontinuierlich mit Kraftstoff bzw. einem Gemisch aus Kraftstoff und der Ladung im Brennraum 6 bis zum Ende der Einspritzung hin versorgt werden können. Dabei bilden sich die erste Verbrennungsfront 33 und zweite Verbrennungsfront 34 zuerst aus, gefolgt von der dritten Verbrennungsfront 36. In der zeitlichen Abfolge dieser kontinuierlichen Prozesse überstreicht der Einspritzstrahl 22 die Strahlteilerkontur 16 bis schließlich der Einspritzstrahl 22 mehr oder weniger genau auf die Strahlteilerkontur 16 in Richtung des Stufenbodens 15 bzw. auf den Stufenboden 15 auftrifft. Im Verlauf dieses Prozesses bildet sich die resultierende Strömung 38 aus, die Längsmittelachse 23 des Einspritzstrahls 22 weiter in den Bereich der Strahlteilerkontur 16 zwingt, so dass der Längsmittelachse 23 des Einspritzstrahls 22 nicht die Stufenwand 13 überstreichen kann oder sogar auf die Kolbenkrone 11 treffen kann, wodurch die zweite Teilmenge bzw. Verbrennungsfront 34 relativ klein bleibt und die Zylinderwand 7 nicht wesentlich berührt und eine ausreichend große Kraftstoffmenge den dritten Teilmengen 35 zur Verfügung steht.

Das in den Figuren 3a bis 3c und 4a bis 4c verdeutlichte Auftreffen des Einspritzstrahls 22 auf den Kolben 8 und die Aufteilung eines Einspritzstrahls 22 in seine drei Teilmengen 33, 34, 35 gilt für große Einspritzmengen mit entsprechend langen Einspritzdauern, selbstverständlich in Abhängigkeit von Einspritzdruck und Einspritzbeginn. Ist die Einspritzmenge kleiner als beispielsweise in einem Volllastbetrieb der Brennkraftmaschine, ist in der Regel auch die Dauer der Einspritzung entsprechend kürzer. Dabei kann es vorkommen, dass der Einspritzstrahl 22 nur teilweise die Strahlteilerkontur 16 überstreicht, wie in Fig. 3b gezeigt, bevor die Einspritzung beendet ist. Dabei wirkt die erfindungsgemäße resultierende Strömung 38 auch auf einen solchen Einspritzstrahl 22, obwohl dieser am Ende seiner Einspritzdauer nicht auf der Strahlteilerkontur 16 zur Kolbenstufe 10 versetzt hin auftrifft. Die Entstehung der dritten Verbrennungsfront 36 kann, wie in Fig. 4c gezeigt, trotzdem erfolgen, da der Einspritzstrahl 22 eine Keulenkontur 25 aufweist, d.h. eine keulenförmige Gemischwolke mit einer Keulenkontur 25 die Längsmittelachse 23 des Einspritzstrahls 22 umgibt und diese Gemischwolke an der Strahlteilerkontur 16 in die erste Teilmenge 33, die in die Kolbenmulde 12 strömt, und in die zweite Teilmenge 34 und die dritten Teilmengen 35, die in Richtung der Kolbenstufe 10 strömen, aufgeteilt wird.

Die Kolbenmulde 12 unterhalb der Strahlteilerkontur 16 weist einen Hinterschnitt 21 im Bereich der Außenwand 20 auf. Durch den im Wesentlichen radial ausgeformten Hinterschnitt 21 werden die in die Kolbenmulde 12 eintretenden ersten Teilmengen 33 der jeweiligen Einspritzstrahlen 22 im Bereich des Hinterschnitts 21 umgelenkt, so dass die ersten Teilmengen 33 den Hinterschnitt 21 quer zur Richtung der Längsmittelachse 9 verlassen. Dies führt mindestens zu einer im Wesentlichen zum Kolbenkegel 17 parallelen Ausbreitung der ersten Teilmengen 33. Dabei kann es auch zu einem leichten Ablösen der ersten Teilmenge 33 vom Kolbenkegel 17 kommen, da im Brennraum 6 eine Längsströmung 40 mit einem deutlichen Richtungsvektor der im Wesentlichen parallel zur Längsmittelachse 9 in Richtung Zylinderkopf 5 gerichtet ist, aufkommen kann, und die ersten Teilmengen 33 in Richtung Zylinderkopf 5 ablenkt. Die Längsströmung 40 ist in den Figuren 3b und 3c mit einem Blockpfeil gekennzeichnet. In den Figuren 3b und 3c ist dieses Ablösen der ersten Verbrennungsfront 33 mit einem vom Kolbenkegel 17 entfernenden Pfeil symbolisiert. Vorteilhafterweise kann damit ein Kontakt der ersten Teilmengen 33 mit dem Kolbenkegel 17 deutlich vermindert werden, so dass den ersten Teilmengen 33 durch einen Kontakt mit dem Kolben 8 im Bereich des Kolbenkegels 17 keine Wärme entzogen werden kann und eine verbesserte Durchmischung mit der im Brennraum 6 befindlichen Ladung erfolgen kann, was den Wirkungsgrad der Verbrennung erneut insgesamt verbessert.

Zur Realisierung des hier vorgestellten 3-Fronten-Brennverfahrens mit zeitlich zur Position des Kolbens 8 vorgesehenen, passenden Ablenkung des jeweiligen Einspritzstrahls 22 hat sich als besonders vorteilhaft herausgestellt, wenn die jeweilige Einspritzdüse 3, sieben bis zwölf, vorzugsweise zehn bis zwölf, insbesondere zehn Einspritzlöcher 41 aufweist, von denen eines exemplarisch in Fig. 5 dargestellt ist. Dementsprechend kann die jeweilige Einspritzdüse 3 sieben bis zwölf bzw. zehn bis zwölf, vorzugsweise genau zehn Einspritzstrahlen 22 erzeugen.

Die Einspritzlöcher 41 der Einspritzdüse 3 sind dabei bzgl. der Längsmittelachse 9 so ausgerichtet, dass bspw. der Strahlkegelwinkel 24 in einem Winkelbereich von etwa 140° bis etwa 160° liegen kann. Bevorzugt wird jedoch ein Strahlkegelwinkel von 152°±1°.

Der Drall 26 bewegt sich zweckmäßig in einem iTheta-Bereich, der sich von etwa 0,3 bis etwa 4,5 und vorzugsweise von etwa 0,8 bis 2,5 erstreckt. Diese Drallzahl iTheta kann in bekannter Weise beispielsweise mit Hilfe der Gleichrichter-Drallmessmethode nach Tippelmann bestimmt werden.

Typische Drallerzeugungsmittel sind dabei die Anordnung und Ausrichtung eines Einlasskanals sowie die Ausgestaltung einer Einlassöffnung. Ebenfalls kann ein Ventilsitz eines Einlassventils zur Drallerzeugung konfiguriert sein. Außerdem ist es bekannt, Drallklappen in Einlasskanälen vorzusehen. Die Möglichkeiten zur Drallerzeugung sind hinlänglich bekannt und werden nicht weiter im Detail diskutiert.

Der Quetschspalt 28 kann zweckmäßigerweise eine Quetschspalthöhe 30 aufweisen, die im Bereich von etwa 0,3% bis etwa 2,5% eines in Fig. 2 mit 42 dargestellten Kolbendurchmessers liegen kann. Vorzugsweise liegt die Quetschspalthöhe 30 in einem Bereich von 0,5% bis etwa 1,2% des Kolbendurchmessers 42. Die Quetschspaltlänge 29 liegt zweckmäßigerweise in einem Bereich von etwa 6% bis etwa 22% des Kolbendurchmessers 42 und vorzugsweise in einem Bereich von etwa 9% bis etwa 14% des Kolbendurchmessers 42.

Gemäß Fig. 5 besitzt das jeweilige Einspritzloch 41 eine Lochlänge 43 und einen Lochdurchmesser 44. Ein Verhältnis von Lochlänge 43 zu Lochdurchmesser 44, das in einem Bereich von etwa 3,0 bis etwa 11,0 und vorzugsweise in einem Bereich von etwa 4,0 bis etwa 8,0 liegt, hat sich als besonders vorteilhaft herausgestellt. Im gezeigten Beispiel der Fig. 5 ist das jeweilige Einspritzloch 41 konisch ausgestaltet, derart, dass es sich von einer Einlassseite 45 bis zu einer Auslassseite 46 verjüngt. Dementsprechend variiert der Lochdurchmesser 44 entlang der Lochlänge 43. Insbesondere kann der Lochdurchmesser 44 an der Einlassseite 45, ggf. stromab einer Verrundung 47, um etwa 2% bis etwa 25%, vorzugsweise um etwa 5% bis etwa 15%, größer sein als der Lochdurchmesser 44 an der Auslassseite 46.

Das in Fig. 5 gezeigte Einspritzloch 41 weist an seiner Einlassseite 45 eine Verrundung 47 auf, die bspw. hydraulisch erosiv hergestellt sein kann.

Eine Längsmittelachse 48 des jeweiligen Einspritzlochs 41 definiert die Längsmittelachse 23 des Einspritzstrahls 22 und schließt mit der Längsmittelachse 9 des Zylinders 2 einen Winkel 49 ein, der halb so groß ist wie der Strahlkegelwinkel 24.

Das hier vorgestellte selbstzündende Verbrennungsverfahren ist für direkt einspritzende Brennkraftmaschinen vorgesehen. Es lässt sich bevorzugt bei Dieselmotoren realisieren. Grundsätzlich ist auch eine Realisierung des hier vorgestellten selbstzündenden Verbrennungsverfahrens bei Benzinmotoren denkbar, sofern diese mit Direkteinspritzung arbeiten.

## Patentansprüche

1. Verbrennungsverfahren mit Selbstzündung für direkt einspritzende Brennkraftmaschinen (1),
- wobei die Brennkraftmaschine (1) zumindest einen Zylinder (2) aufweist, dessen Brennraum (6) seitlich von einer Zylinderwand (7), axial einerseits von einem Zylinderkopf (5) und axial andererseits von einem im Zylinder (2) hubverstellbaren Kolben (8) begrenzt ist,
- wobei der Kolben (8) eine ringförmig umlaufende, gegenüber einer ringförmig umlaufenden Kolbenkrone (11) axial vertieft im Kolben (8) angeordnete Kolbenstufe (10) aufweist, die über eine ringförmig umlaufende Strahlteilerkontur (16) in eine zur Kolbenstufe (10) axial vertieft im Kolben (8) angeordnete Kolbenmulde (12) übergeht,
- wobei dem jeweiligen Zylinder (2) eine Einspritzdüse (3) zugeordnet ist, die im Zylinderkopf (5) angeordnet ist,
- bei dem für einen Verbrennungsvorgang im Selbstzündbetrieb mittels der Einspritzdüse (3) gleichzeitig mehrere Einspritzstrahlen (22) sternförmig in den Brennraum (6) eingespritzt werden,
- bei dem die Einspritzstrahlen (22) an der Strahlteilerkontur (16) jeweils in eine erste Teilmenge (33), in eine zweite Teilmenge (34) und in dritte Teilmengen (35) aufgeteilt werden,
- wobei die erste Teilmenge (33) in die Kolbenmulde (12) eintritt, die zweite Teilmenge (34) über die Kolbenstufe (10) in einen Bereich zwischen der Kolbenkrone (11) und Zylinderkopf (5) eintritt und die dritten Teilmengen (35) sich ausgehend vom jeweiligen Einspritzstrahl (22) beidseitig in der Umfangsrichtung in entgegengesetzten Richtungen entlang der Kolbenstufe (10) ausbreiten und zwischen zwei benachbarten Einspritzstrahlen (22) innerhalb der Kolbenstufe (10) die jeweiligen dritten Teilmengen (35) aufeinander prallen und radial nach innen umgelenkt werden,
- wobei die erste Teilmenge (33) und die zweite Teilmenge (34) eine erste Verbrennungsfront und eine zweite Verbrennungsfront ausbilden und die jeweils gemeinsam nach innen umgelenkten Teilmengen (35) eine dritte Verbrennungsfront (36) radial nach innen in eine Lücke (37) zwischen den Einspritzstrahlen (22) ausbilden,
**dadurch gekennzeichnet, dass**
mittels einer resultierenden Strömung (38) im Wesentlichen gebildet aus einem Drall (26), einer Quetschspaltströmung (31) und einer Strahlströmung (32), die Einspritzstrahlen (22) in einem strahlaufwärts der Strahlteilerkontur (16) liegenden Bereich in Richtung Kolben (8) abgelenkt werden, wobei der Drall (26) durch Anordnung und Ausrichtung eines Einlasskanals, sowie die Ausgestaltung einer Einlassöffnung, durch Konfiguration eines Ventilsitzes eines Einlassventils oder Drallklappen in Einlasskanälen erzeugt wird, wobei im jeweiligen Zylinder (2) im oberen Totpunkt des Kolbens (8) axial zwischen der Kolbenkrone (11) und dem Zylinderkopf (5) der Quetschspalt (28) mit einer axiale Höhe (30) in einem Bereich von etwa 0,2% bis etwa 3,0% eines Kolbendurchmessers (42), vorzugsweise in einem Bereich von etwa 0,4% bis etwa 1,2% des Kolbendurchmessers (42), vorliegt und/oder der Quetschspalt (28) mit einer radiale Länge (29) in einem Bereich von etwa 6% bis etwa 22% des Kolbendurchmessers (42), vorzugsweise in einem Bereich von etwa 9% bis etwa 14% des Kolbendurchmessers (42), vorliegt und wobei die jeweilige Einspritzdüse (3) zum Erzeugen der Einspritzstrahlen (22) mehrere Einspritzlöcher (41) aufweist und die Einspritzlöcher (41) konisch ausgestaltet sind und sich von einer Einlassseite (45) zu einer Auslassseite (46) verjüngen.

2. Verfahren nach Anspruch 1,
**dadurch gekennzeichnet, dass**
die Einspritzstrahlen (22) zuerst außermittig, nämlich zur Kolbenmulde (12) hin versetzt auf die Strahlteilerkontur (16) treffen, im Verlauf der Einspritzung die Mitte der Strahlteilkontur (16) überstreichen und schließlich auf die Strahlteilkontur (16) zur Kolbenstufe (12) hin versetzt auftreffen.

3. Verfahren nach Anspruch 1,
**dadurch gekennzeichnet, dass**
die Einspritzstrahlen (22) zunächst außermittig, nämlich zur Kolbenmulde (12) hin versetzt auf die Strahlteilerkontur (16) treffen und später im Verlauf der Einspritzung auf die Strahlteilkontur (16) auftreffen.

4. Verfahren nach einem der Ansprüche 1 bis 3,
**dadurch gekennzeichnet, dass**
mit der jeweiligen Einspritzdüse (3) gleichzeitig sieben bis zwölf, vorzugsweise zehn bis zwölf Einspritzstrahlen (22) erzeugt werden.

5. Verfahren nach einem der Ansprüche 1 bis 4,
**dadurch gekennzeichnet, dass**
der jeweilige Einspritzstrahl (22) während einer Einspritzdauer von maximal 40° Kurbelwellenwinkel eingebracht wird.

6. Verfahren nach einem der Ansprüche 1 bis 5,
**dadurch gekennzeichnet, dass**
die Einspritzstrahlen (22) mit einem Strahlkegelwinkel (24) eingespritzt werden, der in einem Winkelbereich von etwa 140° bis etwa 160° und vorzugsweise bei 152°±1° liegt.

7. Verfahren nach einem der Ansprüche 1 bis 6,
**dadurch gekennzeichnet, dass**
der Strahlkegelwinkel (24) sich im Wesentlichen koaxial zum Kolben (8) ausbreitet.

8. Verfahren nach einem der Ansprüche 1 bis 7,
**dadurch gekennzeichnet, dass**
die Einspritzstrahlen (22) mit einem Einspritzdruck von 500bar bis 2800bar in den Brennraum (6) eingebracht werden.

9. Verfahren nach einem der Ansprüche 1 bis 8,
**dadurch gekennzeichnet, dass**
die ersten Teilmengen (33) in einem vorgesehenen Hinterschnitt (21) der Kolbenmulde (12) abgelenkt werden.

10. Verfahren nach Anspruch 9,
**dadurch gekennzeichnet, dass**
der Hinterschnitt (21) bis zu 3% eines Kolbendurchmessers (42) beträgt.

11. Brennkraftmaschine, insbesondere für ein Kraftfahrzeug, geeignet um ein Verbrennungsverfahren gemäß einem der Ansprüche 1 bis 10 durchzuführen,
- mit mindestens einem Zylinder (2), dessen Brennraum (6) seitlich von einer Zylinderwand (7), axial einerseits von einem Zylinderkopf (5) und axial andererseits von einem im Zylinder (2) hubverstellbaren Kolben (8) begrenzt ist,
- mit einer Einspritzdüse (3) je Zylinder (2), die im Zylinderkopf (5) angeordnet ist,
- wobei der Kolben (8) eine ringförmig umlaufende, gegenüber einer ringförmig umlaufenden Kolbenkrone (11) axial vertieft im Kolben (8) angeordnete Kolbenstufe (10) aufweist, die über eine ringförmig umlaufende Strahlteilerkontur (16) in eine zur Kolbenstufe (10) axial vertieft im Kolben (8) angeordnete Kolbenmulde (12) übergeht,
- wobei die jeweilige Einspritzdüse (3) für einen Verbrennungsvorgang im Selbstzündbetrieb gleichzeitig mehrere Einspritzstrahlen (22) sternförmig in den Brennraum (6) einspritzt,
- wobei sich die Einspritzstrahlen (22) an der Strahlteilerkontur (16) jeweils in eine erste Teilmenge (33), in eine zweite Teilmenge (34) und in dritte Teilmengen (35) aufteilen,
- wobei die erste Teilmenge (33) in die Kolbenmulde (12) eintritt, die zweite Teilmenge (34) über die Kolbenstufe (10) in einen Bereich zwischen der Kolbenkrone (11) und Zylinderkopf (5) eintritt und die dritten Teilmengen (35) sich ausgehend vom jeweiligen Einspritzstrahl (22) beidseitig in der Umfangsrichtung in entgegengesetzten Richtungen entlang der Kolbenstufe (10) ausbreiten und zwischen zwei benachbarten Einspritzstrahlen (22) innerhalb der Kolbenstufe (10) die jeweiligen dritten Teilmengen (35) aufeinander prallen und radial nach innen umlenken,
- wobei die erste Teilmenge (33) und die zweite Teilmenge (34) jeweils eine erste Verbrennungsfront und eine zweite Verbrennungsfront ausbilden und die jeweils gemeinsam nach innen umgelenkten Teilmengen (35) eine dritte Verbrennungsfront (36) radial nach innen in eine Lücke (37) zwischen den Einspritzstrahlen (22) ausbilden,
**dadurch gekennzeichnet, dass**
eine resultierende Strömung (38) im Wesentlichen gebildet aus einem Drall (26), einer Quetschspaltströmung (31) und einer Strahlströmung (32), die Einspritzstrahlen (22) in einem strahlaufwärts der Strahlteilerkontur (16) liegenden Bereich in Richtung Kolben (8) ablenkt, wobei der Drall (26) durch Anordnung und Ausrichtung eines Einlasskanals, sowie die Ausgestaltung einer Einlassöffnung, durch Konfiguration eines Ventilsitzes eines Einlassventils oder Drallklappen in Einlasskanälen erzeugt wird, wobei im jeweiligen Zylinder (2) im oberen Totpunkt des Kolbens (8) axial zwischen der Kolbenkrone (11) und dem Zylinderkopf (5) der Quetschspalt (28) mit einer axiale Höhe (30) in einem Bereich von etwa 0,2% bis etwa 3,0% eines Kolbendurchmessers (42), vorzugsweise in einem Bereich von etwa 0,4% bis etwa 1,2% des Kolbendurchmessers (42), vorliegt und/oder der Quetschspalt (28) mit einer radiale Länge (29) in einem Bereich von etwa 6% bis etwa 22% des Kolbendurchmessers (42), vorzugsweise in einem Bereich von etwa 9% bis etwa 14% des Kolbendurchmessers (42), vorliegt und wobei die jeweilige Einspritzdüse (3) zum Erzeugen der Einspritzstrahlen (22) mehrere Einspritzlöcher (41) aufweist und die Einspritzlöcher (41) konisch ausgestaltet sind und sich von einer Einlassseite (45) zu einer Auslassseite (46) verjüngen.

12. Brennkraftmaschine nach Anspruch 11,
**dadurch gekennzeichnet, dass**
der Drall (26) ein iTheta von maximal 4,5 aufweist.

13. Brennkraftmaschine nach Anspruch 12,
**dadurch gekennzeichnet, dass**
der Drall (26) entsprechend den Betriebsbedingungen änderbar ist.

14. Brennkraftmaschine nach einem der Ansprüche 11 bis 13,
**dadurch gekennzeichnet, dass**
die Kolbenstufe eine radiale Ausdehnung von 4% bis etwa 20% eines Kolbendurchmessers (42) und eine axiale Höhe von etwa 2,5% bis 7% des Kolbendurchmessers (42) aufweist.

15. Brennkraftmaschine nach einem der Ansprüche 11 bis 14,
**dadurch gekennzeichnet, dass**
die Einspritzlöcher (41) jeweils ein Verhältnis von Lochlänge (43) zu Lochdurchmesser (44) aufweisen, das in einem Bereich von etwa 3 bis etwa 11, vorzugsweise in einem Bereich von etwa 4 bis etwa 8 liegt.

16. Brennkraftmaschine nach einem der Ansprüche 11 bis 15,
**dadurch gekennzeichnet, dass**
die Einspritzlöcher (41) an einer Einlassseite (45) eine Verrundung (47) aufweisen, wobei die mittels der Verrundung (47) erreichte Durchflusserhöhung in einem Bereich von etwa 5% bis etwa 25%, vorzugsweise in einem Bereich von etwa 10% bis etwa 20%, liegt.

17. Brennkraftmaschine nach Anspruch 11,
**dadurch gekennzeichnet, dass**
ein Lochdurchmesser (44) an der Einlassseite (45), ggf. stromab einer Verrundung (47), in einem Bereich von etwa 2% bis etwa 25%, vorzugsweise in einem Bereich von etwa 5% bis etwa 15%, größer ist als ein Lochdurchmesser (44) an der Auslassseite (46).

18. Brennkraftmaschine nach einem der Ansprüche 11 bis 17,
**dadurch gekennzeichnet, dass**
der Kolben mit einem Kolbenkegel (17) ausgestattet ist, der sich koaxial und zentral in der Kolbenmulde befindet und einen Kegelwinkel (18) aufweist, der bei etwa 124° ± 10°, insbesondere bei etwa 124° ± 5°, liegt.

## Claims

1. Combustion method with self-ignition for a directly injected internal combustion engine (1),
- wherein the internal combustion engine (1) has at least one cylinder (2), the combustion chamber (6) of which is bounded laterally by a cylinder wall (7) and axially by a cylinder head (5) on the one hand and by a piston (8) displaceable by stroking in the cylinder (2) on the other hand,
- wherein the piston (8) comprises an annular continuous piston stage (10), which is axially recessed in the piston (8) relative to an annular continuous piston crown (11) and which merges via an annular continuous jet splitter contour (16) into a piston recess (12), which is axially recessed in the piston (8) relative to the piston stage (10),
- wherein the respective cylinder (2) is assigned an injector (3) located in the cylinder head (5),
- in which method several injection jets (22) are injected simultaneously into the combustion chamber (6) in a star shape by means of the injector (3) for a combustion process in the self-ignition mode,
- in which method the injection jets (22) are split at the jet splitter contour (16) into a first sub-quantity (33), a second sub-quantity (34) and third sub-quantities (35),
- wherein the first sub-quantity (33) enters the piston recess (12), the second sub-quantity (34) enters a region between the piston crown (11) and the cylinder head (5) via the piston stage (10) and the third sub-quantities (35) spread from the respective injection jet (22) on both sides in the circumferential direction in opposite directions along the piston stage (10) and the respective third sub-quantities (35) collide between two adjacent injection jets (22) within the piston stage (10) and are deflected radially inwards,
- wherein the first sub-quantity (33) and the second sub-quantity (34) form a first combustion front and a second combustion front and the jointly inward-deflected sub-quantities (35) form a third combustion front (36) radially inwards in a gap (37) between the injection jets (22),
**characterised in that**
by means of a resulting flow (38), substantially formed from a swirl (26), a pinch gap flow (31) and a jet flow (32), the injection jets (22) are diverted into a region up-jet of the jet splitter contour (16) towards the piston (8), wherein the swirl (26) is generated by the placing and the orientation of an intake port and the design of an inlet opening, by the configuration of a valve seat of an intake valve or of swirl flaps in intake ports, wherein, in the respective cylinder (2) in the top dead centre of the piston (8), the pinch gap (28) is provided axially between the piston crown (11) and the cylinder head (5) and has an axial height (30) in a range of approximately 0.2% to approximately 3.0% of a piston diameter (42), preferably in a range of approximately 0.4% to approximately 1.2% of the piston diameter (42), and/or the pinch gap (28) has a radial length (29) in a range of approximately 6% to approximately 22% of the piston diameter (42), preferably in a range of approximately 9% to approximately 14% of the piston diameter (42), and wherein the respective injector (3) has a plurality of injection holes (41) for generating the injection jets (22) and the injection holes (41) are conical in design and taper from an inlet side (45) towards an outlet side (46).

2. Method according to claim 1,
**characterised in that**
the injection jets (22) initially hit the jet splitter contour (16) eccentrically, i.e. offset towards the piston recess (12), sweep over the centre of the jet splitter contour (16) in the course of the injection and finally hit the jet splitter contour (16) with an offset towards the piston recess (12).

3. Method according to claim 1,
**characterised in that**
the injection jets (22) initially hit the jet splitter contour (16) eccentrically, i.e. offset towards the piston recess (12), and then hit the jet splitter contour (16) in the course of the injection.

4. Method according to any of claims 1 to 3,
**characterised in that**
seven to twelve, preferably ten to twelve, injection jets (22) are generated simultaneously with the respective injector (3).

5. Method according to any of claims 1 to 4,
**characterised in that**
the respective injection jet (22) is introduced during an injection time of maximally 40° crank angle.

6. Method according to any of claims 1 to 5,
**characterised in that**
the injection jets (22) are injected with a jet cone angle (24) in a range of approximately 140° to approximately 160°, being preferably 152° ±1°.

7. Method according to any of claims 1 to 6,
**characterised in that**
the jet cone angle (24) spreads substantially coaxially with the piston (8).

8. Method according to any of claims 1 to 7,
**characterised in that**
the injection jets (22) are introduced into the combustion chamber (6) with an injection pressure of 500 mbar to 2800 mbar.

9. Method according to any of claims 1 to 8,
**characterised in that**
the first sub-quantities (33) are deflected in an undercut (21) provided in the piston recess (12).

10. Method according to claim 9,
**characterised in that**
the undercut (21) is up to 3% of a piston diameter (42).

11. Internal combustion engine, in particular for a motor vehicle, suitable for carrying out a method according to any of claims 1 to 10,
- comprising at least one cylinder (2), the combustion chamber (6) of which is bounded laterally by a cylinder wall (7) and axially by a cylinder head (5) on the one hand and by a piston (8) displaceable by stroking in the cylinder (2) on the other hand,
- comprising an injector (3) located in the cylinder head (5) for each cylinder (2),
- wherein the piston (8) comprises an annular continuous piston stage (10), which is axially recessed in the piston (8) relative to an annular continuous piston crown (11) and which merges via an annular continuous jet splitter contour (16) into a piston recess (12), which is axially recessed in the piston (8) relative to the piston stage (10),
- wherein the respective injector (3) simultaneously injects several injection jets (22) into the combustion chamber (6) in a star shape for a combustion process in the self-ignition mode,
- wherein the injection jets (22) are divided into a first sub-quantity (33), a second sub-quantity (34) and third sub-quantities (35) at the jet splitter contour (16),
- wherein the first sub-quantity (33) enters the piston recess (12), the second sub-quantity (34) enters a region between the piston crown (11) and the cylinder head (5) via the piston stage (10) and the third sub-quantities (35) spread from the respective injection jet (22) on both sides in the circumferential direction in opposite directions along the piston stage (10) and the third sub-quantities (35) collide between two adjacent injection jets (22) within the piston stage (10) and are deflected radially inwards,
- wherein the first sub-quantity (33) and the second sub-quantity (34) form a first combustion front and a second combustion front and the jointly inward-deflected sub-quantities (35) form a third combustion front (36) radially inwards in a gap (37) between the injection jets (22),
**characterised in that**
a resulting flow (38), substantially formed from a swirl (26), a pinch gap flow (31) and a jet flow (32), diverts the injection jets (22) into a region up-jet of the jet splitter contour (16) towards the piston (8), wherein the swirl (26) is generated by the placing and the orientation of an intake port and the design of an inlet opening, by the configuration of a valve seat of an intake valve or of swirl flaps in intake ports, wherein, in the respective cylinder (2) in the top dead centre of the piston (8), the pinch gap (28) is provided axially between the piston crown (11) and the cylinder head (5) and has an axial height (30) in a range of approximately 0.2% to approximately 3.0% of a piston diameter (42), preferably in a range of approximately 0.4% to approximately 1.2% of the piston diameter (42), and/or the pinch gap (28) has a radial length (29) in a range of approximately 6% to approximately 22% of the piston diameter (42), preferably in a range of approximately 9% to approximately 14% of the piston diameter (42), and wherein the respective injector (3) has a plurality of injection holes (41) for generating the injection jets (22) and the injection holes (41) are conical in design and taper from an inlet side (45) towards an outlet side (46).

12. Internal combustion engine according to claim 11,
**characterised in that**
the swirl (26) has an iTheta of maximally 4.5.

13. Internal combustion engine according to claim 12,
**characterised in that**
the swirl (26) can be changed in accordance with operating conditions.

14. Internal combustion engine according to any of claims 11 to 13,
**characterised in that**
the piston stage has a radial dimension of approximately 4% to approximately 20% of a piston diameter (42) and an axial height of approximately 2.5% to approximately 7% of the piston diameter (42).

15. Internal combustion engine according to any of claims 11 to 14,
**characterised in that**
each of the injection holes (41) has a ratio of hole length (43) to hole diameter (44) in a range of approximately 3 to approximately 11, preferably in a range of approximately 4 to approximately 8.

16. Internal combustion engine according to any of claims 11 to 15,
**characterised in that**
the injection holes (41) have a curvature (47) at an inlet side (45), the flow increase obtained by means of the curvature (47) being in a range of approximately 5% to approximately 25%, preferably in a range of approximately 10% to approximately 20%.

17. Internal combustion engine according to claim 16,
**characterised in that**
a hole diameter (44) on the inlet side (45), downstream of a curvature (47) if applicable, is greater by a range of approximately 2% to approximately 25%, preferably by a range of approximately 5% to approximately 15%, than a hole diameter (44) on the outlet side (46).

18. Internal combustion engine according to any of claims 11 to 17,
**characterised in that**
the piston is designed with a piston cone (17) located coaxially and centrally in the piston recess and having a cone angle of approximately 124° ±10°, in particular of approximately 124° ±5°.

## Revendications

1. Procédé de combustion au moyen d'un allumage par compression pour des moteurs à combustion interne à injection directe (1),
- le moteur à combustion interne (1) comprenant au moins un cylindre (2), dont la chambre de combustion (6) est délimitée latéralement par une paroi de cylindre (7), axialement d'une part par une tête de cylindre (5) et axialement d'autre part par un piston (8) à changement de course dans le cylindre (2),
- le piston (8) présentant un étage (10) de piston périphérique en forme d'anneau enfoncé axialement dans le piston (8), par rapport à une couronne de piston (11) périphérique en forme d'anneau, qui sur un contour (16) de séparateur de jet périphérique en forme d'anneau passe au-delà dans une cavité (12) de piston vers l'étage (10) de piston enfoncé axialement dans le piston (8),
- un gicleur d'injection (3) étant associé au cylindre respectif (2) qui est disposé dans la tête de cylindre (5),
- pour un processus de combustion dans l'allumage par compression au moyen du gicleur d'injection (3) plusieurs jets d'injection (22) étant simultanément injectés en forme d'étoile dans la chambre de combustion (22),
- les jets d'injection (22) sur le contour (16) du séparateur de jet étant divisés respectivement en une première quantité partielle (33), en une deuxième quantité partielle (34) et en des troisièmes quantités partielles (35),
- la première quantité partielle (33) pénétrant dans la cavité de piston (12), la deuxième quantité partielle pénétrant par l'étage de piston (10) dans une zone située entre la couronne de piston (11) et la tête de cylindre (5) et les troisièmes quantités partielles (35) partant à partir de chaque jet d'injection (22) de chaque côté dans la direction périphérique se propageant dans des directions opposées le long de l'étage de piston (10) et entre deux jets d'injection (22) adjacents à l'intérieur de l'étage de piston (10) les troisièmes quantités partielles respectives (35) se heurtant les unes aux autres, et étant déviés radialement vers l'intérieur,
- la première quantité partielle (33) et la deuxième quantité partielle (34) formant un premier front de combustion et un deuxième front de combustion et les quantités partielles (35) respectives déviées ensemble vers l'intérieur formant un troisième front de combustion (36) radialement vers l'intérieur dans un espace (37) entre les jets d'injection (22),
**caractérisé en ce qu'**au moyen d'un écoulement résultant (38) formé essentiellement à partir d'un tourbillon (26), d'un écoulement de fente d'écrasement (31) et d'un écoulement de jet (32), les jets d'injection (22) sont déviés dans une zone se trouvant en amont du contour de jet (16) en direction du piston (8), le tourbillon (26) étant produit par la disposition et l'orientation d'un canal d'admission, ainsi que par la forme d'un orifice d'admission, par configuration d'un siège de soupape d'admission ou des vannes papillons dans les canaux d'admission, dans chaque cylindre (2) au point mort supérieur du piston (8) axialement entre la couronne de piston (11) et la tête de cylindre (5) de la fente d'écrasement (28) à une hauteur axiale (30) dans une zone comprise entre 0,2 % et environ 3,0 % du diamètre de piston (42), de préférence dans une zone comprise entre environ 0,4 % et environ 1,2 % du diamètre de piston (42), et/ou la fente d'écrasement (28) ayant une longueur radiale (29) se situe dans une zone comprise entre environ 6 % et environ 22 % du diamètre de piston (42), de préférence dans une zone comprise entre environ 9 % et environ 14 % du diamètre de piston (42) et le gicleur d'injection respectif (3) pour produire des jets d'injection (22) présentant plusieurs orifices d'injection (41) et les orifices d'injection (41) étant coniques et se rétrécissant à partir d'un côté d'admission (45) vers un côté d'évacuation (46).

2. Procédé selon la revendication 1, **caractérisé en ce que** les jets d'injection (22) percutent d'abord de manière excentrée, autrement dit vers la cavité (12) de piston, le contour (16) du séparateur de jet, au cours de l'injection balayent la moitié du contour (16) du séparateur de jet et enfin percutent de manière décalée le contour (16) de séparateur de jet vers l'étage de piston (12).

3. Procédé selon la revendication 1, les jets d'injection (22) percutent d'abord de manière excentrée, autrement dit vers la cavité (12) de piston le contour (16) du séparateur de jet et plus tard au cours de l'injection le contour (16) de séparateur de jets.

4. Procédé selon l'une quelconque des revendications 1 à 3, **caractérisé en ce que** les gicleurs d'injection (3) respectifs produisent simultanément de sept à douze, de préférence de dix à douze jets d'injection (22).

5. Procédé selon l'une quelconque des revendications 1 à 4, **caractérisé en ce que** le jet d'injection (22) respectif est amené pendant une durée d'injection à un angle de vilebrequin de 40° maximum.

6. Procédé selon l'une quelconque des revendications 1 à 5, **caractérisé en ce que** les jets d'injection (22) sont injectés selon un angle de cône d'injection (24) qui se situe dans une plage angulaire comprise entre environ 140° et environ 160° et de préférence à 152 ± 1°.

7. Procédé selon l'une quelconque des revendications 1 à 6, **caractérisé en ce que** l'angle du cône d'injection (24) s'élargit essentiellement coaxialement au piston (8).

8. Procédé selon l'une quelconque des revendications 1 à 7, **caractérisé en ce que** les jets d'injection (22) sont introduits à une pression d'injection comprise entre 500 bars et 2 800 bars dans la chambre de combustion (6).

9. Procédé selon l'une quelconque des revendications 1 à 8, **caractérisé en ce que** les premières quantités partielles (33) sont déviées dans une section arrière (21) ménagée dans la cavité de piston (12).

10. Procédé selon la revendication 9, **caractérisé en ce que** la section arrière (21) s'élève à 3 % maximum d'un diamètre de piston (42).

11. Moteur à combustion interne, en particulier pour un véhicule automobile, servant à exécuter un procédé de combustion selon l'une quelconque des revendications 1 à 10,
- comprenant au moins un cylindre (2) dont la chambre de combustion (6) étant délimitée latéralement par une paroi (7) de cylindre, axialement d'une part par une tête (6) de cylindre latéralement par rapport à une paroi (7) de cylindre, axialement d'autre part par une tête (5) de cylindre et axialement d'autre part par un piston (8) pouvant régler la course dans le cylindre (2),
- comprenant un gicleur d'injection (3) par cylindre (2), qui est disposé dans la tête (5) de cylindre,
- le piston présentant un étage (10) de piston périphérique de forme annulaire, enfoncé axialement dans le piston (8), par rapport à une couronne (11) de piston périphérique de forme annulaire, qui passe par un contour (16) de séparateur de jet périphérique de forme annulaire dans une cavité (12) de piston enfoncée axialement par rapport à l'étage (10) de piston axialement dans le piston (8),
- le gicleur d'injection (3) respectif pour un processus de combustion injectant en mode d'allumage par compression simultanément plusieurs jets d'injection (22) en forme d'étoile dans la chambre de combustion (6),
- les jets d'injection (22) sur le contour (16) de séparateur de jet se divisant respectivement en une première quantité partielle (33), en une deuxième quantité partielle (34) et en des troisièmes quantités partielles (35),
- la première quantité partielle (33) pénétrant dans la cavité (12) de piston, la deuxième quantité partielle (34) pénétrant par l'étage (10) de piston dans une zone entre la couronne (11) de piston et la tête (5) de cylindre et les troisième quantités partielles (35) en partant de chaque jet d'injection (22) de chaque côté dans la direction périphérique se propagent dans des directions opposées le long de l'étage (10) de piston et entre deux jets d'injections (22) adjacents à l'intérieur de l'étage (10) de piston les troisièmes quantités partielles (35) respectives se heurtent les uns aux autres et sont déviés radialement vers l'intérieur,
- la première quantité partielle (33) et la deuxième quantité partielle (34) formant respectivement un premier front de combustion et un deuxième front de combustion et les quantités partielles déviées respectivement conjointement vers l'intérieur formant un troisième front de combustion (36) radialement vers l'intérieur dans un espace (37) entre les jets d'injection (22),
**caractérisé en ce qu'**un écoulement résultant (38) essentiellement formé à partir d'un tourbillon (26), d'un écoulement de fente d'écrasement (31) et d'un écoulement de jet (32) dévie les jets d'injections dans une zone se situant en amont du contour (16) de séparateur de jet dans la direction de piston (8),
le tourbillon (26) étant produit par disposition et orientation d'un canal d'admission, ainsi que la forme d'un orifice d'admission, par configuration d'un siège d'une soupape d'admission ou par des vannes papillons dans les canaux d'admission, dans le cylindre respectif (2) au point mort supérieur du piston (8) axialement entre la couronne (11) de piston et la tête (5) de cylindre la fente d'écrasement à une hauteur axiale (30) se situe dans une zone comprise entre environ 0,2 % et environ 3,0 % d'un diamètre (42) de piston, de préférence dans une zone comprise environ entre 0,4 % et environ 1,2 % du diamètre de piston (42) et/ou la fente d'écrasement (28) à une longueur radiale (29) se situe, dans une zone comprise entre 6 % et environ 22 % du diamètre de piston (42), de préférence dans une zone comprise environ entre 9 % et environ 14 % du diamètre (42) de piston, et/ou le gicleur d'injection respectif (3) pour produire les jets d'injection (22) présente plusieurs orifices d'injection (41) et les orifices d'injection (41) sont coniques et se rétrécissent à partir d'un côté d'admission (45) vers un côté d'évacuation (46).

12. Moteur à combustion interne selon la revendication 11, **caractérisé en ce que** le tourbillon (26) présente un ithêta de 4,5 maximum.

13. Moteur à combustion interne selon la revendication 12, **caractérisé en ce que** le tourbillon (26) peut se modifier en fonction des conditions de fonctionnement.

14. Moteur à combustion interne selon l'une quelconque des revendications 11 à 13, **caractérisé en ce que** l'étage de piston présente un allongement compris entre 4 % et environ 20 % d'un diamètre (42) de piston et une hauteur axiale comprise entre environ 2,6 % et 7 % du diamètre (42) de piston.

15. Moteur à combustion interne selon l'une quelconque des revendications 11 à 14, **caractérisé en ce que** les orifices d'injection (41) présentent respectivement un rapport de longueur d'orifice (43) jusqu'au diamètre d'orifice (44) qui se situe dans une zone comprise entre environ 3 et environ 11, de préférence dans une zone comprise entre environ 4 et environ 8.

16. Moteur à combustion interne selon l'une quelconque des revendications 11 à 15, **caractérisé en ce que** les orifices d'injection (41) sur un côté d'admission présentent un arrondi (47), l'augmentation de débit atteinte au moyen de l'arrondi (47) se situant dans une zone comprise entre environ 5 % et environ 25 %, de préférence dans une zone comprise environ entre 10 % et environ 20 %.

17. Moteur à combustion interne selon la revendication 11, **caractérisé en ce qu'**un diamètre (44) d'orifice sur le côté d'admission (45), le cas échéant en aval d'un arrondi (47), dans une zone comprise entre environ 2 % et environ 25 %, de préférence dans une zone comprise entre environ 5 % et environ 15 % est supérieur à un diamètre (44) d'orifice sur le côté d'évacuation (46).

18. Moteur à combustion interne selon l'une quelconque des revendications 11 à 17, **caractérisé en ce que** le piston est doté d'un cône (17) de piston qui se trouve coaxialement et au centre dans la cavité de piston et présente un angle conique (18) qui se situe entre environ 124° ±10°, notamment à environ 124° ± 5°.
